# FASCICULE DE BREVET EUROPEEN

(11) **EP 1 888 351 B1**
(45) Date de publication et mention de la délivrance du brevet: **22.04.2009**
(21) Numéro de dépôt: 06763220.8
(22) Date de dépôt: 22.05.2006
(51) Int. Cl.: B60C 11/00

(54) **PNEUMATIQUE POUR DEUX ROUES.**
REIFEN FÜR EIN ZWEIRÄDRIGES FAHRZEUG
TYRE FOR TWO-WHEELER

(30) Priorité: 24.05.2005 FR 0505232
(43) Date de publication de la demande: 20.02.2008
(73) Titulaire: Société de Technologie Michelin, 63000 Clermont-Ferrand (FR); Michelin Recherche et Technique S.A., 1763 Granges-Paccot (CH)
(72) Inventeur: VALLE, Alain, F-63118 Cebazat (FR); PROST, Pascal, F-63200 Riom (FR)
(74) Mandataire: Le Cam, Stéphane Georges Elie
(86) Numéro de dépôt international: PCT/EP2006/062498
(87) Numéro de publication internationale: WO 2006/125766

(56) Documents cités:
- WO-A-20/05044593
- DE-A1- 2 707 504
- DE-A1- 2 852 389
- FR-A- 2 561 588

## Description

La présente invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé; d'où la terminologie généralement admise, comportant notamment les termes «nappes», «carcasse», «tringle», «conformation» pour désigner le passage d'un profil plat à un profil toroïdal, etc.

II existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet peuvent être associées à au moins une couche d'éléments circonférentiels, généralement obtenus par enroulement hélicoïdal d'une bandelette d'au moins un élément de renforcement enrobé de caoutchouc.

Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

Concernant la bande de roulement de ces pneumatiques, il est connu, pour améliorer l'adhérence du pneumatique, que la nature même du mélange de caoutchouc (ou encore appelée : composition de caoutchouc) venant au contact de ladite chaussée a une incidence notable. Toutefois, en parallèle à cette amélioration de performance en adhérence, il se produit le plus souvent une perte de performance en usure, ce qui se traduit par une durée de vie sur usure réduite et nécessite un changement plus fréquent des pneumatiques sur un véhicule.

Il est connu notamment du document FR 1 445 678 de réaliser des bandes de roulement comportant trois zones réparties axialement pour conférer des propriétés différentes en terme d'usure et d'adhérence. Ce type de réalisation est intéressant mais limite le plus souvent les avantages obtenus à un type d'utilisation donné.

Le document DE-A-2 852 389 montre un pneumatique correspondant au préambule de la revendication 1.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

L'invention a pour but de réaliser des pneumatiques, notamment pour motocyclette, qui combine des propriétés satisfaisantes d'adhérence et d'usure quel que soit le type d'utilisation, notamment que la motocyclette suive essentiellement un parcours droit ou un parcours sinueux et plus particulièrement sur sol mouillé.

Ce but a été atteint selon l'invention par un pneumatique comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, ladite bande de roulement étant, au moins localement, constituée majoritairement d'un premier mélange polymérique et d'au moins un deuxième mélange polymérique présentant des propriétés physico-chimique différentes de celles dudit premier mélange polymérique, le volume de la bande de roulement étant constituée par le premier mélange polymérique pour au moins 75%, le deuxième mélange polymérique étant réparti de manière discrète et la valeur maximale de tan(δ) à 40°C du deuxième mélange étant supérieure d'au moins 10% à la valeur maximale de tan(δ) du premier mélange.

Selon un mode préféré de réalisation, le volume du deuxième mélange est supérieur à 3% du volume de la bande de roulement.

De préférence également, le deuxième mélange réparti de manière discrète est présent sous forme d'inclusions dont la dimension selon la direction circonférentielle est au moins égale à 5 mm.

De préférence encore, le deuxième mélange réparti de manière discrète est présent sous forme d'inclusions dont la dimension selon la direction axiale est au plus égale à 5 mm.

Des variantes de réalisation de l'invention prévoient avantageusement que le deuxième mélange est présent au moins en partie au moins sur une partie de la surface extérieure de la bande de roulement.

De préférence encore, l'écart de module complexe (ΔG*) du deuxième mélange est supérieure d'au moins 10% à l'écart de module complexe (ΔG*) du premier mélange.

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)ₘₐₓ, ainsi que l'écart de module complexe (ΔG*) entre les valeurs à 0.15 et 50% de déformation (effet Payne).

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

L'invention ainsi définie autorise la réalisation d'un pneumatique dont la bande de roulement peut être constituée d'un premier mélange polymérique choisit notamment pour ses propriétés de résistance à l'usure et dans lequel vont apparaître en surface de la bande de roulement des incrustations d'un deuxième mélange polymérique présentant d'autres propriétés telles que des propriétés d'adhérence renforcées notamment sur sol mouillé. La dimension et la répartition desdites incrustations vont définir un pourcentage dudit deuxième mélange polymérique dans l'aire de contact de la bande de roulement avec le sol. La combinaison de ces deux mélanges polymériques va permettre de constituer une bande de roulement présentant d'une part une résistance à l'usure satisfaisante du fait du premier mélange largement majoritaire et d'autre part des propriétés d'adhérence renforcées par la présence du deuxième mélange polymérique. Les inventeurs ont en effet su mettre en évidence, notamment lors des essais, qu'une faible quantité surfacique du deuxième mélange dans l'aire de contact et avantageusement répartie de manière homogène est suffisante pour améliorer très sensiblement l'adhérence du pneumatique.

Selon l'invention, le deuxième mélange polymérique présente une dureté Shore A différente de celle du premier mélange polymérique.

La dureté Shore A des mélanges polymériques après cuisson est appréciée conformément à la norme ASTM D 2240-86.

D'autres propriétés du deuxième mélange polymérique peuvent être différentes. Il peut par exemple s'agir de la couleur qui peut apporter un effet fonctionnel et/ou esthétique ; il peut par exemple alors jouer un rôle d'indicateur visuel d'usure.

Une première variante de réalisation de l'invention prévoit que le deuxième mélange polymérique est réparti de sorte que, dans au moins un plan circonférentiel du pneumatique, à au moins une distance radiale de la surface extérieure de la bande de roulement donnée, au moins une propriété physico-chimique de la masse polymérique de la bande de roulement varie selon la direction circonférentielle.

Selon cette première variante de réalisation, l'invention prévoit que le deuxième mélange est réparti sur la périphérie du pneumatique avantageusement en surface de la bande de roulement pour retrouver l'équilibre entre propriété d'usure et d'adhérence quel que soit la position du pneumatique en termes de rotation. Selon cette variante de réalisation de l'invention, cette répartition circonférentielle se retrouve quel que soit le niveau d'usure du pneumatique, ladite répartition étant réalisée en profondeur dans la bande de roulement pour tenir compte de ladite usure du pneumatique, au cours de son utilisation.

Une deuxième variante de réalisation de l'invention prévoit que le deuxième mélange polymérique est réparti de sorte que, dans au moins un plan radial du pneumatique, à au moins une distance radiale de la surface extérieure de la bande de roulement donnée, au moins une propriété physico-chimique de la masse polymérique de la bande de roulement varie selon la direction axiale.

Selon cette deuxième variante de réalisation, l'invention prévoit que le deuxième mélange est réparti selon la largeur axiale du pneumatique avantageusement en surface de la bande de roulement pour retrouver l'équilibre entre propriété d'usure et d'adhérence quel que soit la position du pneumatique en termes de carrossage. Selon cette variante de réalisation de l'invention, cette répartition circonférentielle peut avantageusement se retrouver quel que soit le niveau d'usure du pneumatique, ladite répartition étant réalisée en profondeur dans la bande de roulement pour tenir compte de ladite usure du pneumatique, au cours de son utilisation.

Une troisième variante de réalisation de l'invention prévoit que le deuxième mélange polymérique est réparti de sorte que, dans au moins un plan radial du pneumatique et/ou dans au moins un plan circonférentiel du pneumatique, au moins une propriété physico-chimique de la masse polymérique de la bande de roulement varie selon la direction radiale.

Cette troisième variante de réalisation de l'invention prévoit avantageusement une répartition des deux mélanges polymériques selon la direction radiale du pneumatique, c'est-à-dire dans la profondeur de la bande de roulement du pneumatique. Cette variante de l'invention prévoit donc que les incrustations du deuxième mélange polymérique ne sont avantageusement pas réalisées de manière continue selon la direction radiale.

Selon l'une ou l'autre de ces variantes de réalisation, il peut être prévue que le deuxième mélange n'apparaît pas en surface de la bande de roulement mais modifie localement les propriétés de celle-ci, par exemple du fait de propriétés hystérétiques très différentes entre les deux mélanges.

L'invention prévoit encore selon un mode de réalisation avantageux de combiner deux ou l'ensemble de ces variantes de réalisation.

Selon l'invention et en fonction de l'usage prévu du pneumatique, il est ainsi par exemple possible de réaliser un pneumatique dont la bande de roulement constituée essentiellement d'un premier mélange polymérique présente des incrustations d'un deuxième mélange polymérique sur une partie limitée de la surface de la bande de roulement. Il s'agira par exemple des parties axialement extérieures de la bande de roulement pour un usage du pneumatique sur une motocyclette en carrossage pour améliorer l'adhérence dans ce type d'utilisation tout en conservant des propriétés d'usure satisfaisantes.

L'invention prévoit encore la possibilité d'introduire au moins un troisième mélange polymérique réparti sur la surface de la bande de roulement par exemple pour obtenir des variations des propriétés d'adhérence de manière graduelle selon la direction axiale.

Un troisième mélange polymérique peut également être introduit dans la bande de roulement à un niveau radialement différent de celui où est mis en place le deuxième mélange polymérique, par exemple pour voir évoluer les propriétés d'adhérence en fonction de l'usure de la bande de roulement du pneumatique. Une telle répartition de plusieurs mélanges polymériques dans l'épaisseur de la bande de roulement peut encore par exemple permettre de créer des gradients de rigidité dans l'épaisseur de la bande de roulement qui peuvent également influencer les propriétés d'adhérence du pneumatique.

L'invention prévoit encore selon un mode de réalisation avantageux que la bande de roulement comprend au moins deux bandes circonférentielles, chacune des bandes circonférentielles étant constituée majoritairement d'un premier mélange polymérique, ledit premier mélange polymérique étant différent d'une bande circonférentielle à l'autre.

Un pneumatique obtenu selon ce mode de réalisation peut notamment permettre d'établir des compromis entre performance d'usure et performance d'adhérence qui varient selon la direction axiale du pneumatique. En effet, il est ainsi possible de réaliser un pneumatique qui présente en surface de la bande de roulement des zones dans lesquelles le premier mélange polymérique n'est pas le même, par exemple par ce que les exigences en termes d'usure varient selon l'utilisation du pneumatique selon une trajectoire rectiligne ou bien s'il est utilisé en carrossage, chacun de ces premiers mélanges étant incrusté par au moins un deuxième mélange, ledit deuxième mélange pouvant également varier d'une zone à l'autre.

Un pneumatique selon l'invention pourra notamment être réalisé selon une technique sur noyau dur telle que celle décrite précédemment. Le procédé de fabrication nécessite alors par exemple l'intervention d'au moins un deuxième moyen de distribution et de mise en place de matière polymérique lors de la réalisation de la bande de roulement. Il peut par exemple s'agir d'un deuxième outil, telle qu'une extrudeuse, comme décrit dans le brevet EP 0 264 600, qui vient ponctuellement se substituer au premier outil pour mettre en place une petite quantité du deuxième mélange polymérique.

Un tel pneumatique qui comme énoncé précédemment est avantageusement réalisé selon une technique du type sur noyau dur ou toroïdal autorise notamment la mise en place des mélanges polymériques dans la position quasi-finale ; en effet, une étape de conformation n'étant pas requise selon ce type de procédé la position des mélanges polymériques ne varient plus après leur mise en place. Ce type de procédé autorise ainsi la réalisation de pneumatiques selon l'invention dans lesquels la mise en place et l'emplacement des différents mélanges polymériques sont parfaitement maîtrisés.

Avantageusement, dans le cas d'une structure radiale, les éléments de renforcement de la structure de renfort de type carcasse font avec la direction circonférentielle un angle compris entre 65° et 90°.

Une réalisation avantageuse de l'invention prévoit encore que la structure de renfort de type carcasse est constituée de deux demi nappes s'étendant par exemple des épaules aux bourrelets. Selon la nature, la quantité et la disposition des éléments de renforcement de sommet, l'invention prévoit effectivement la suppression de la structure de carcasse dans au moins une partie de la zone du pneumatique se trouvant sous la bande de roulement. La réalisation d'une telle structure de carcasse peut être faite selon l'enseignement du document EP-A-0 844 106.

Selon une réalisation préférée de l'invention, la structure de renforcement de sommet du pneumatique comporte au moins deux couches d'éléments de renforcement telles que d'une couche à la suivante les tronçons forment entre eux des angles compris entre 20 et 160° et de préférence entre 40 et 100°.

Avantageusement encore, la structure de renforcement de sommet comporte au moins une couche d'éléments de renforcement circonférentiels.

Les éléments de renforcement de la couche d'éléments de renforcement circonférentiels sont de préférence métalliques et/ou textiles et/ou en verre et de préférence encore présentent un module d'élasticité supérieur à 6000 N/mm².

Les éléments de renforcement des couches de travail, dont les éléments de renforcements ne sont pas orientés circonférentiellement, sont avantageusement en matériau textile.

D'autres détails et caractéristiques avantageux de l'invention ressortiront ci-après de la description des exemples de réalisation de l'invention en référence aux figures 1 à 5 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention,
- figure 3, une vue méridienne d'un schéma d'un pneumatique selon un troisième mode de réalisation de l'invention,
- figure 4, une vue méridienne d'un schéma d'un pneumatique selon un quatrième mode de réalisation de l'invention,
- figure 5, une vue méridienne d'un schéma d'un pneumatique selon un cinquième mode de réalisation de l'invention.

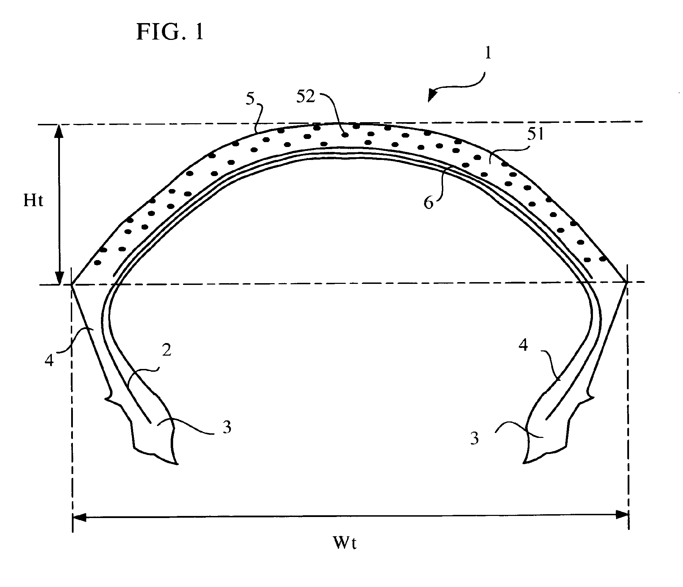

Les figures 1 à 5 ne sont pas représentées à l'échelle pour en simplifier la compréhension.

La figure 1 représente un pneumatique 1 comprenant une armature de carcasse constituée d'une couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6 qui peut selon le cas être constituée de deux couches de travail comportant des éléments de renforcement parallèles entre eux dans une même couche et croisés d'une couche à la suivante et/ou d'une couche d'éléments de renforcement circonférentiels.

Radialement au-dessus de l'armature de sommet 6, on trouve la bande de roulement 5, constituée conformément à l'invention d'un premier mélange de caoutchouc 51 majoritaire et d'un deuxième mélange de caoutchouc 52. Le deuxième mélange de caoutchouc 52 est présent sous la forme d'incrustations noyées dans le premier mélange de caoutchouc 51. Sur la représentation de la figure 1, les incrustations du deuxième mélange de caoutchouc 52 sont réparties sur la totalité de la bande de roulement selon la direction axiale et selon la direction longitudinale. La représentation de la figure 1 prévoit également une répartition des incrustations du deuxième mélange de caoutchouc 52 selon la direction radiale. Conformément à cette réalisation de l'invention, quel que soit l'état d'usure de la bande de roulement le pourcentage de la surface du mélange de caoutchouc 52 par rapport à la surface totale de la bande de roulement est sensiblement le même.

Le mélange de caoutchouc 52 est avantageusement choisi de sorte que ses propriétés d'adhérence sont supérieures à celles mélange de caoutchouc 51, ledit mélange de caoutchouc 51 étant plus particulièrement choisi pour sa résistance à l'usure. La bande de roulement ainsi réalisé peut permettre de définir un compromis résistance à l'usure /adhérence favorable par rapport à ce qu'il est possible d'obtenir avec un seul mélange de caoutchouc.

Les propriétés dynamiques ΔG* et tan(δ)ₘₐₓ mesurées selon les normes énoncées précédemment sont les suivantes :

| Mélanges | tan(δ)ₘₐₓ | ΔG* |
|---|---|---|
| Premier mélange (majoritaire) | 0.359 | 4.34 |
| Deuxième mélange (inclusions) | 0.731 | 11.39 |

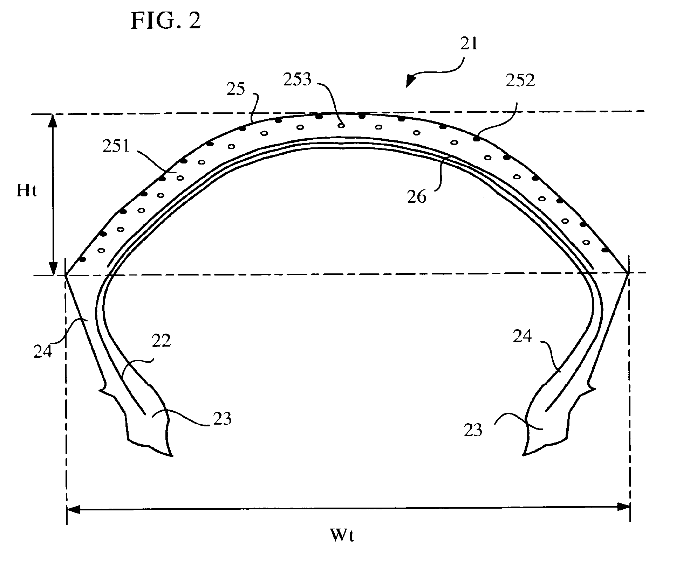

La figure 2 illustre un deuxième mode de réalisation d'un pneumatique 21 selon l'invention, dans lequel des incrustations de deux mélanges de caoutchouc 252, 253 sont noyées dans un premier mélange de caoutchouc 251. Les deux mélanges de caoutchouc 252, 253 sont répartis dans la bande de roulement en deux couches distinctes séparées l'une de l'autre radialement de sorte qu'elles apparaissent successivement au cours de l'usure du pneumatique. Le mélange de caoutchouc 253 peut par exemple présenter des propriétés d'adhérence encore supérieures à celles du mélange de caoutchouc 252 pour renforcer encore l'adhérence du pneumatique lorsque celui-ci vieillit.

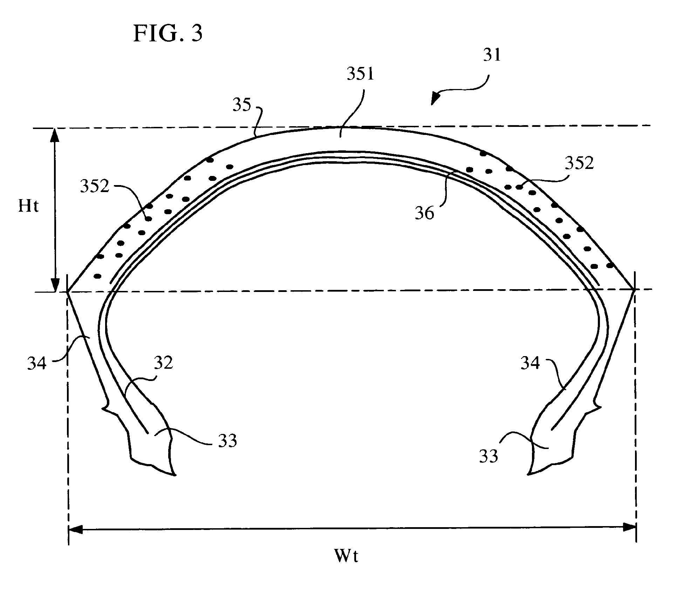

Le mode de réalisation du pneumatique 31 illustré sur la figure 3 diffère des précédents en ce que la répartition des incrustions d'au moins un deuxième mélange de caoutchouc 352 dans le mélange de caoutchouc 351 n'est pas réalisée sur la totalité de la bande de roulement en ce qui concerne la direction axiale. Selon la direction longitudinale, la répartition reste avantageusement sensiblement homogène pour conserver des propriétés identiques au tour de roue. Une telle réalisation conforme à la figure 3 peut permettre d'augmenter les propriétés d'adhérence sur les zones de la surface axialement extérieures de la bande de roulement tout en conservant des propriétés essentiellement de résistance à l'usure au sommet de la bande de roulement, pour tenir compte respectivement de l'utilisation en ligne droite d'une moto et de son utilisation sur parcours sinueux qui impose une mise en carrossage importante des pneumatiques.

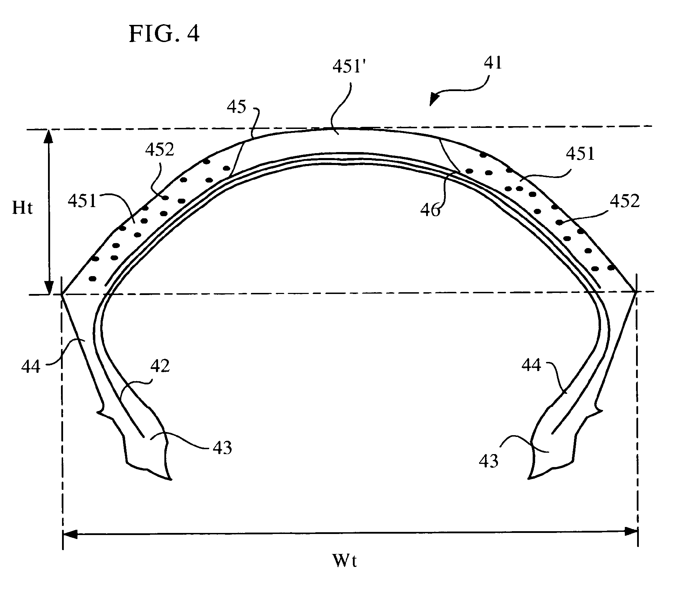

La figure 4 représente un pneumatique 41 conforme à l'invention qui comme dans le cas de la figure 3 prévoit une répartition des incrustations d'au moins un deuxième mélange de caoutchouc 452 sur une ou plusieurs zones axiales de la bande de roulement. Cette répartition est en outre combinée à au moins deux mélanges de caoutchouc principaux 451, 451', également répartis selon la direction axiale. Selon une telle réalisation de l'invention, il est ainsi possible de combiner des propriétés différentes de premiers mélanges de caoutchouc différents à la présence locale d'incrustations d'au moins un deuxième mélange de caoutchouc.

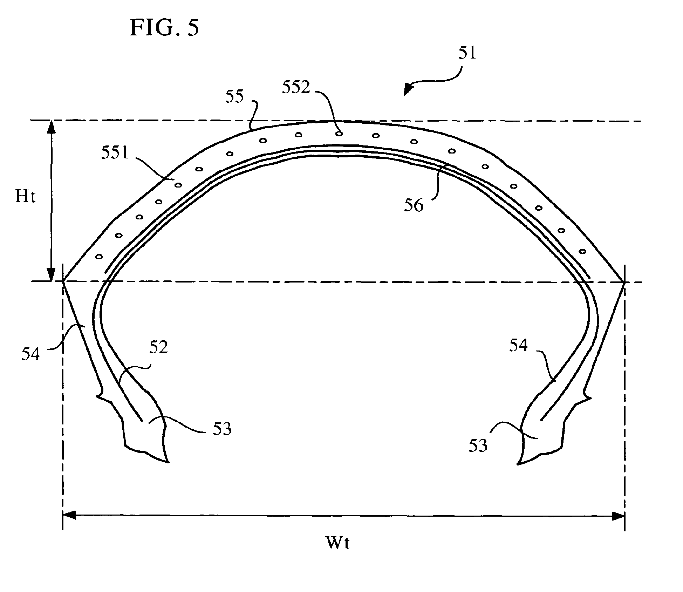

Le mode de réalisation du pneumatique 51 illustré sur la figure 5 diffère des précédents en ce que la répartition des incrustions d'au moins un deuxième mélange de caoutchouc 552 dans le mélange de caoutchouc 551 n'est pas réalisée sur la totalité de la bande de roulement en ce qui concerne la direction radiale. Selon la direction longitudinale, la répartition reste avantageusement sensiblement homogène pour conserver des propriétés identiques au tour de roue. Conformément à la représentation de la figure 5, les incrustations du deuxième mélange de caoutchouc 552 n'apparaissent pas en surface de la bande de roulement. Ce deuxième mélange de caoutchouc 552 peut par exemple être choisi pour présenter des pertes hystérétiques très importantes et ainsi permettre un échauffement local du premier mélange de caoutchouc 551, notamment en surface de la bande de roulement. Cet échauffement local de la surface de la bande de roulement peut par exemple également permettre de modifier les performances globales en termes d'adhérence. Une telle réalisation conforme à la figure 5 peut donc permettre d'augmenter les propriétés d'adhérence sur les zones de la surface axialement extérieures de la bande de roulement tout en conservant des propriétés de résistance à l'usure.

L'invention prévoit encore de combiner l'un ou l'autre des différents modes de réalisations de l'invention illustrés sur chacune des figures et notamment de combiner une présence sur une ou plusieurs zones axiales seulement de la bande de roulement, éventuellement en association avec différents premiers mélanges de caoutchouc, à la présence d'au moins deux deuxièmes mélanges de caoutchouc incorporés sous forme d'incrustations dans des couches de la bande de roulement séparées radialement les unes des autres.

L'invention prévoit encore soit une répartition aléatoire d'au moins un deuxième mélange au sein de la bande de roulement soit une répartition ordonnée et choisie dudit au moins deuxième mélange de caoutchouc. Cette dernière variante de réalisation peut notamment être réalisée lorsque le pneumatique est réalisé selon une technique de type sur noyau dur.

Des essais ont été réalisés avec des motocyclettes, de gamme sportive de 750 cm³ de cylindrée, équipées à l'avant de pneumatiques de dimension 120/70 ZR 17 et à l'arrière de pneumatiques de dimension 180/55 ZR 17. Les pressions de gonflage sont identiques et égales à 2,5 bar.

Les essais ont consisté à faire rouler le même pilote sur la même moto équipée successivement de pneumatiques différents et à mesurer le temps de parcours au tour de piste.

Les pneumatiques témoins sont des pneumatiques dont la bande de roulement comporte uniquement le premier mélange tel qu'il est présenté dans la description de la figure 1. Des essais sont faits à l'état neuf puis à 10% d'usure.

Les pneumatiques selon l'invention sont réalisés conformément à la description de la figure 1, la bande de roulement présentant des inclusions représentant 5% du volume de la bande de roulement ainsi que 5% de la surface de ladite bande de roulement à l'état neuf ainsi qu'à 10 % d'usure..

Les résultats sont présentés dans le tableau suivant, une base 100 étant prise pour le temps mesuré avec un pneumatique témoin à l'état neuf :

| Pneumatique | Témoin | Témoin | Invention | Invention |
|---|---|---|---|---|
| | Etat neuf | 10 % d'usure | Etat neuf | 10 % d'usure |
| Temps | 100 | 101 | 98 | 98 |

Les résultats obtenus s'interprètent de la façon suivante ; des valeurs supérieures à 100 correspondent à des pneumatiques moins rapides et donc présentant une moins bonne adhérence. Des valeurs inférieures à 100 correspondent à des pneumatiques plus rapides et donc présentant une meilleure adhérence.

Les résultats obtenus lors des essais montrent tout d'abord qu'effectivement les pneumatiques selon l'invention permettent d'améliorer les propriétés d'adhérence.

En outre, il ressort des essais réalisés que les pneumatiques selon l'invention permettent d'obtenir une meilleure pérennité des propriétés d'adhérence au cours de l'utilisation du pneumatique et de son usure.

## Revendications

1. Pneumatique comportant au moins une structure de renfort de type carcasse (2), formée d'éléments de renforcement, ancrée de chaque côté du pneumatique à un bourrelet (3) dont la base est destinée à être montée sur un siège de jante, chaque bourrelet se prolongeant radialement vers l'extérieur par un flanc (4), les flancs rejoignant radialement vers l'extérieur une bande de roulement (5), au moins localement, la bande de roulement étant constituée majoritairement d'un premier mélange polymérique (51) et d'au moins un deuxième mélange polymérique (52) présentant des propriétés physico-chimique différentes de celles dudit premier mélange polymérique, le volume de la bande de roulement étant constitué par le premier mélange polymérique pour au moins 75%, le deuxième mélange polymérique étant réparti de manière discrète, **caractérisé en ce que** la valeur maximale de tan(δ) à 40°C du deuxième mélange est supérieure d'au moins 10% à la valeur maximale de tan(δ) du premier mélange.

2. Pneumatique selon la revendication 1, **caractérisé en ce que** le volume du deuxième mélange est supérieur à 3% du volume de la bande de roulement.

3. Pneumatique selon la revendication 1 ou 2, **caractérisé en ce que** le deuxième mélange est présent sous forme d'inclusions dont la dimension selon la direction circonférentielle est au moins égale à 5 mm.

4. Pneumatique selon l'une des revendications 1 à 3, **caractérisé en ce que** le deuxième mélange est présent sous forme d'inclusions dont la dimension selon la direction axiale est au plus égale à 5 mm.

5. Pneumatique selon l'une des revendications 1 à 4, **caractérisé en ce que** le deuxième mélange est présent au moins en partie au moins sur une partie de la surface extérieure de la bande de roulement.

6. Pneumatique selon l'une des revendications précédentes, **caractérisé en ce que** l'écart de module complexe (ΔG*) du deuxième mélange est supérieur d'au moins 10% à l'écart de module complexe (ΔG*) du premier mélange.

7. Pneumatique selon l'une des revendications précédentes, **caractérisé en ce que** le deuxième mélange polymérique est d'une composition différente de celle du premier mélange polymérique.

8. Pneumatique selon l'une des revendications précédentes, **caractérisé en ce que** le deuxième mélange polymérique présente des propriétés d'adhérence supérieures à celles dudit premier mélange polymérique.

9. Pneumatique selon l'une des revendications précédentes, **caractérisé en ce que** le deuxième mélange polymérique présente une dureté Shore A différente de celle du premier mélange polymérique.

10. Pneumatique selon l'une des revendications précédentes, **caractérisé en ce que** le deuxième mélange polymérique est réparti de sorte que, dans au moins un plan circonférentiel du pneumatique, à au moins une distance radiale de la surface extérieure de la bande de roulement donnée, au moins une propriété physico-chimique de la masse polymérique de la bande de roulement varie selon la direction circonférentielle.

11. Pneumatique selon l'une des revendications précédentes, **caractérisé en ce que** le deuxième mélange polymérique est réparti de sorte que, dans au moins un plan radial du pneumatique, à au moins une distance radiale de la surface extérieure de la bande de roulement donnée, au moins une propriété physico-chimique de la masse polymérique de la bande de roulement varie selon la direction axiale.

12. Pneumatique selon l'une des revendications précédentes, **caractérisé en ce que** le deuxième mélange polymérique est réparti de sorte que, dans au moins un plan radial du pneumatique et/ou dans au moins un plan circonférentiel du pneumatique, au moins une propriété physico-chimique de la masse polymérique de la bande de roulement varie selon la direction radiale.

13. Pneumatique selon l'une des revendications précédentes, **caractérisé en ce que** la bande de roulement comprend au moins deux bandes circonférentielles et **en ce que** chacune des bandes circonférentielles est constituée majoritairement d'un premier mélange polymérique, ledit premier mélange polymérique étant différent d'une bande circonférentielle à l'autre.

14. Pneumatique selon l'une des revendications précédentes, **caractérisé en ce que** les éléments de renforcement de la structure de renfort de type carcasse font avec la direction circonférentielle un angle compris entre 65° et 90°.

15. Pneumatique selon l'une des revendications précédentes, **caractérisé en ce que** la structure de renfort de type carcasse est réalisée en deux demi-couches s'étendant des épaules aux bourrelets.

16. Pneumatique selon l'une des revendications précédentes, comportant sous la bande de roulement une structure de renforcement de sommet **caractérisé en ce que** la structure de renforcement de sommet comporte au moins deux couches d'éléments de renforcement et **en ce que** d'une couche à la suivante les tronçons forment entre eux des angles compris entre 20 et 160°.

17. Pneumatique selon l'une des revendications précédentes, **caractérisé en ce que** la structure de renforcement de sommet comporte au moins une couche d'éléments de renforcement circonférentiels.

18. Pneumatique selon la revendication 17, **caractérisé en ce que** les éléments de renforcement de la couche d'éléments de renforcement circonférentiels sont métalliques et/ou textiles et/ou en verre.

19. Pneumatique selon l'une des revendications 17 ou 18, **caractérisé en ce que** les éléments de renforcement de la couche d'éléments de renforcement circonférentiels présentent un module d'élasticité supérieur à 6000 N/mm².

20. Pneumatique selon l'une des revendications 16 à 19, **caractérisé en ce que** les éléments de renforcement des couches de travail sont en matériau textile.

21. Utilisation d'un pneumatique tel que décrit selon l'une des revendications 1 à 20 pour un véhicule motorisé à deux roues tel qu'une motocyclette.

## Claims

1. Tire comprising at least one reinforcing structure of the carcass type (2), formed of reinforcing elements, anchored on each side of the tire into a bead (3) the base of which is intended to be mounted on a rim seat, each bead extending radially outwards in the form of a sidewall (4), the sidewalls radially towards the outside meeting a tread (5), the tread, at least locally, consisting predominantly of a first polymer compound (51) and of at least one second polymer compound (52) having physico-chemical properties different from those of the said first polymer compound, at least 75% of the volume of the tread being made up of the first polymer compound, the second polymer compound being distributed discretely, **characterized in that** the maximum value of tanδ at 40°C for the second compound is at least 10% higher than the maximum value of tanδ for the first compound.

2. Tire according to Claim 1, **characterized in that** the volume of the second compound is greater than 3% of the volume of the tread.

3. Tire according to Claim 1 or 2, **characterized in that** the second compound is present in the form of inclusions of which the dimension in the circumferential direction measures at least 5 mm.

4. Tire according to one of Claims 1 to 3, **characterized in that** the second compound is present in the form of inclusions of which the dimension in the axial direction measures 5 mm at most.

5. Tire according to one of Claims 1 to 4, **characterized in that** the second compound is present at least partially over at least part of the exterior surface of the tread.

6. Tire according to one of the preceding claims, **characterized in that** the difference in complex modulus (ΔG*) of the second compound is at least 10% higher than the difference in complex modulus (ΔG*) of the first compound.

7. Tire according to one of the preceding claims, **characterized in that** the second polymer compound is of a composition that differs from that of the first polymer compound.

8. Tire according to one of the preceding claims, **characterized in that** the second polymer compound has adhesion properties superior to those of the said first polymer compound.

9. Tire according to one of the preceding claims, **characterized in that** the second polymer compound has a Shore A hardness different from that of the first polymer compound.

10. Tire according to one of the preceding claims, **characterized in that** the second polymer compound is distributed in such a way that, in at least one circumferential plane of the tire, at at least one given radial distance from the exterior surface of the tread, at least one physico-chemical property of the polymer mass of the tread varies in the circumferential direction.

11. Tire according to one of the preceding claims, **characterized in that** the second polymer compound is distributed in such a way that, in at least one radial plane of the tire, at at least one given radial distance from the exterior surface of the tread, at least one physico-chemical property of the polymer mass of the tread varies in the axial direction.

12. Tire according to one of the preceding claims, **characterized in that** the second polymer compound is distributed in such a way that, in at least one radial plane of the tire and/or in at least one circumferential plane of the tire, at least one physico-chemical property of the polymer mass of the tread varies in the radial direction.

13. Tire according to one of the preceding claims, **characterized in that** the tread comprises at least two circumferential strips and **in that** each of the circumferential strips consists predominantly of a first polymer compound, the said first polymer compound differing from one circumferential strip to the other.

14. Tire according to one of the preceding claims, **characterized in that** the reinforcing elements of the carcass-type reinforcing structure make an angle of between 65° and 90° with respect to the circumferential direction.

15. Tire according to one of the preceding claims, **characterized in that** the carcass-type reinforcing structure is made in two half-layers running from the shoulders to the beads.

16. Tire according to one of the preceding claims, comprising, under the tread, a crown reinforcing structure, **characterized in that** the crown reinforcing structure comprises at least two layers of reinforcing elements and **in that**, from one layer to the next, the portions make angles of between 20 and 160° with one another.

17. Tire according to one of the preceding claims, **characterized in that** the crown reinforcing structure comprises at least one layer of circumferential reinforcing elements.

18. Tire according to Claim 17, **characterized in that** the reinforcing elements in the layer of circumferential reinforcing elements are made of metal and/or textile and/or glass.

19. Tire according to one of Claims 17 and 18, **characterized in that** the reinforcing elements in the layer of circumferential reinforcing elements have an elastic modulus in excess of 6000 N/mm².

20. Tire according to one of Claims 16 to 19, **characterized in that** the reinforcing elements in the working layers are made of a textile material.

21. Use of a tire as described in any one of Claims 1 to 20 for a motorized two-wheeled vehicle such as a motorcycle.

## Patentansprüche

1. Reifen, der mindestens eine Verstärkungsstruktur vom Typ Karkasse (2) umfasst, die aus Verstärkungselementen gebildet ist, die an jeder Seite des Reifens an einem Wulst (3) verankert sind, dessen Basis dazu dient, auf eine Reifensitzfläche montiert zu werden, wobei sich jeder Wulst radial nach außen über eine Seitenwand (4) verlängert, wobei die Seitenwände radial nach außen mit einer Lauffläche (5) mindestens lokal verbunden sind, wobei die Lauffläche größtenteils aus einem ersten Polymergemisch (51) und mindestens einem zweiten Polymergemisch (52) besteht, das physikalisch-chemische Eigenschaften aufweist, die sich von jenen des ersten Polymergemischs unterscheiden, wobei das Volumen der Lauffläche zu mindestens 75 % aus dem ersten Polymergemisch besteht, wobei das zweite Polymergemisch auf diskrete Weise verteilt ist, **dadurch gekennzeichnet, dass** der maximale Wert von tan(δ) bei 40 °C des zweiten Gemischs um mindestens 10 % größer ist als der maximale Wert von tan(δ) des ersten Gemischs.

2. Reifen nach Anspruch 1, **dadurch gekennzeichnet, dass** das Volumen des zweiten Gemischs mehr als 3 % des Volumens der Lauffläche ausmacht.

3. Reifen nach Anspruch 1 oder 2, **dadurch gekennzeichnet, dass** das zweite Gemisch in Form von Einschlüssen vorhanden ist, deren Dimension gemäß der Umfangsrichtung mindestens gleich 5 mm beträgt.

4. Reifen nach einem der Ansprüche 1 bis 3, **dadurch gekennzeichnet, dass** das zweite Gemisch in Form von Einschlüssen vorhanden ist, deren Dimension gemäß der Axialrichtung höchstens gleich 5 mm beträgt.

5. Reifen nach einem der Ansprüche 1 bis 4, **dadurch gekennzeichnet, dass** das zweite Gemisch mindestens teilweise auf mindestens einem Teil der äußeren Oberfläche der Lauffläche vorhanden ist.

6. Reifen nach einem der vorhergehenden Ansprüche, **dadurch gekennzeichnet, dass** die Abweichung des komplexen Moduls (ΔG*) des zweiten Gemischs um mindestens 10 % größer ist als die Abweichung des komplexen Moduls (ΔG*) des ersten Gemischs.

7. Reifen nach einem der vorhergehenden Ansprüche, **dadurch gekennzeichnet, dass** das zweite Polymergemisch eine Zusammensetzung ist, die sich von der des ersten Polymergemischs unterscheidet.

8. Reifen nach einem der vorhergehenden Ansprüche, **dadurch gekennzeichnet, dass** das zweite Polymergemisch bessere Haftungseigenschaften als das erste Polymergemisch aufweist.

9. Reifen nach einem der vorhergehenden Ansprüche, **dadurch gekennzeichnet, dass** das zweite Polymergemisch eine Shore-Härte A aufweist, die sich von der des ersten Polymergemischs unterscheidet.

10. Reifen nach einem der vorhergehenden Ansprüche, **dadurch gekennzeichnet, dass** das zweite Polymergemisch so verteilt ist, dass in mindestens einer Umfangsebene des Reifens mit mindestens einem gegebenen radialen Abstand der äußeren Oberfläche der Lauffläche mindestens eine physikalisch-chemische Eigenschaft der Polymermasse der Lauffläche gemäß der Umlaufrichtung variiert.

11. Reifen nach einem der vorhergehenden Ansprüche, **dadurch gekennzeichnet, dass** das zweite Polymergemisch so verteilt ist, dass in mindestens einer Radialebene des Reifens mit mindestens einem gegebenen radialen Abstand der äußeren Oberfläche der Lauffläche mindestens eine physikalisch-chemische Eigenschaft der Polymermasse der Lauffläche gemäß der Axialrichtung variiert.

12. Reifen nach einem der vorhergehenden Ansprüche, **dadurch gekennzeichnet, dass** das zweite Polymergemisch so verteilt ist, dass in mindestens einer Radialebene des Reifens und/oder in mindestens einer Umfangsebene des Reifens mindestens eine physikalisch-chemische Eigenschaft der Polymermasse der Lauffläche gemäß der Radialrichtung variiert.

13. Reifen nach einem der vorhergehenden Ansprüche, **dadurch gekennzeichnet, dass** die Lauffläche mindestens zwei Umlaufbänder umfasst und **dadurch**, dass jedes der Umlaufbänder größtenteils aus einem ersten Polymergemisch besteht, wobei sich das erste Polymergemisch eines Umlaufbands jeweils von dem anderen unterscheidet.

14. Reifen nach einem der vorhergehenden Ansprüche, **dadurch gekennzeichnet, dass** die Verstärkungselemente der Verstärkungsstruktur vom Typ Karkasse mit der Umfangsrichtung einen Winkel im Bereich zwischen 65 ° und 90 ° bilden.

15. Reifen nach einem der vorhergehenden Ansprüche, **dadurch gekennzeichnet, dass** die Verstärkungsstruktur vom Typ Karkasse in zwei Halbschichten ausgeführt wird, die sich von den Schultern zu den Wülsten erstrecken.

16. Reifen nach einem der vorhergehenden Ansprüche, der unter der Lauffläche eine Gürtelverstärkungsstruktur umfasst, **dadurch gekennzeichnet, dass** die Gürtelverstärkungsstruktur mindestens zwei Schichten aus Verstärkungselementen umfasst, und **dadurch**, dass von einer Schicht zur nächsten die Abschnitte untereinander Winkel im Bereich zwischen 20 und 160 ° bilden.

17. Reifen nach einem der vorhergehenden Ansprüche, **dadurch gekennzeichnet, dass** die Gürtelverstärkungsstruktur mindestens eine Schicht aus umlaufenden Verstärkungselementen umfasst.

18. Reifen nach Anspruch 17, **dadurch gekennzeichnet, dass** die Verstärkungselemente der Schicht aus umlaufenden Verstärkungselementen aus Metall und/oder Textil und/oder Glas bestehen.

19. Reifen nach einem der Ansprüche 17 oder 18, **dadurch gekennzeichnet, dass** die Verstärkungselemente der Schicht aus umlaufenden Verstärkungselementen ein Elastizitätsmodul von mehr als 6.000 N/mm² aufweisen.

20. Reifen nach einem der Ansprüche 16 bis 19, **dadurch gekennzeichnet, dass** die Verstärkungselemente der Arbeitsschichten aus Textilmaterial sind.

21. Verwendung eines Reifens, wie nach einem der Ansprüche 1 bis 20 beschrieben, für ein zweirädriges Motorfahrzeug, wie etwa ein Motorrad.
